# EUROPEAN PATENT APPLICATION

(11) **EP 1 544 528 A1**
(43) Date of publication of application: **22.06.2005**
(21) Application number: 04106467.6
(22) Date of filing: 10.12.2004
(51) Int. Cl.: F16L 11/08

(54) **Hose assembly having varied reinforcing layers**

(30) Priority: 17.12.2003 US 738483
(71) Applicant: THE GOODYEAR TIRE & RUBBER COMPANY, Akron, Ohio 44316-0001 (US)
(72) Inventor: Henry, Brian, Sun Prarie WI 53590 (US)
(74) Representative: Kutsch, Bernd

(57) **Abstract**

A hydraulic brake hose assembly (10, 10a, 10b) has a core hose layer (12), a first reinforcing layer (14) over the core hose layer (12), an intermediate hose layer (20), a second reinforcing layer (22) over the intermediate hose layer (20), and an outer hose layer (30) over the second reinforcing layer (22). In one embodiment, the first and second reinforcing layers (14, 22) have braid patterns formed in one of a 1-over, 1-under pattern or a 3-over, 3-under pattern. In another embodiment, one of the first and second reinforcing layers (14, 22) has a braid formed in a 2-over, 2-under pattern, and the other of the reinforcing layers (14, 22) has a braid formed in one of a 1-over, 1-under pattern or a 3-over, 3-under pattern.

## Description

### Field of the Invention

The present invention relates generally to hose assemblies, and more particularly to braided, reinforced hydraulic brake hose.

### Background of the Invention

Reinforced hydraulic hose is well known in industry for use in transporting fluids under pressure, particularly in automotive brake hose applications. These hose assemblies generally comprise a polymeric core hose layer and one or more reinforcing layers formed from strands of fiber or wire material that are braided over the core layer. In most applications, the hose also includes an intermediate hose layer formed over the core hose layer and a first reinforcing layer. A second reinforcing layer is thereafter braided over the intermediate hose layer. Finally, a polymeric cover material is generally formed over the second reinforcing layer to complete the hose assembly.

The reinforcing layers of conventional hydraulic hose assemblies are generally applied by rotary braiding machines such as those described in US-A-4,266,461; 5,099,744; and 5,775,195. Using these rotary braiding machines, strands of fiber or wire reinforcing material are wound upon the hose layers in an interwoven, braided pattern, as known in the art. Generally, the rotary braiding machines are configured to provide a braid pattern wherein the strands are successively passed over and under pairs of oppositely wound strands. This is referred to herein as a 2-over, 2-under braid pattern. In certain applications, it may be desired to further improve hose performance by varying the braid patterns, for example, to optimize burst strength, volumemetric expansion, dynamic life, or coupleability of the hoses.

There is thus a need for a hydraulic brake hose which can be formed with reinforcing layers having braid patterns other than the standard 2-over, 2-under braid pattern in both reinforcing layers.

### Summary of the Invention

The present invention provides a hydraulic brake hose having reinforcing layers formed in braid patterns other than conventional 2-over, 2-under patterns in each layer. The braid patterns can be selected to optimize various properties of the hydraulic hose, as may be desired. In an exemplary embodiment, the brake hose comprises a core hose layer, a first reinforcing layer over the core hose layer, an intermediate hose layer over the first reinforcing layer, a second reinforcing layer over the intermediate layer, and an outer hose layer. Each of the first and second reinforcing layers have braid patterns formed in one of a 1-over, 1-under pattern or a 3-over, 3-under pattern. The reinforcing layers may comprise fiber or wire material.

In another embodiment, one of the first and second reinforcing layers has a braid formed in a 2-over, 2-under pattern, and the other of the reinforcing layers has a braid formed in one of a 1-over, 1-under pattern or a 3-over, 3-under pattern.

In another embodiment, a method of making hydraulic brake hose includes forming a core hose layer, selectively braiding a first reinforcing layer over the core layer in one of a 1-over, 1-under pattern or a 3-over, 3-under pattern, forming an intermediate hose layer over the first reinforcing layer, selectively braiding a second reinforcing layer over the intermediate hose layer in one of a 1-over, 1-under pattern or a 3-over, 3-under pattern, and forming an outer hose layer over the second reinforcing layer.

### Brief Description of the Drawings

The accompanying drawings illustrate embodiments of the invention and, together with a general description of the invention given above, and the detailed description given below, serve to explain the invention.
FIG. 1 is a perspective view depicting an exemplary hose assembly according to the present invention;
FIG. 1A is an alternative embodiment of an exemplary hose assembly similar the hose assembly of FIG. 1;
FIG. 2 is a cross-sectional view of the hose assembly of FIG. 1, taken along line 2-2;
FIG. 3 is a cross-sectional view, similar to FIG. 2, depicting an alternate embodiment of a hose assembly according to the present invention;
FIG. 4 is a perspective schematic view illustrating detail of an exemplary rotary braiding machine; and
FIG. 5 is a perspective view depicting another embodiment of a hose assembly according to the present invention.

### Detailed Description

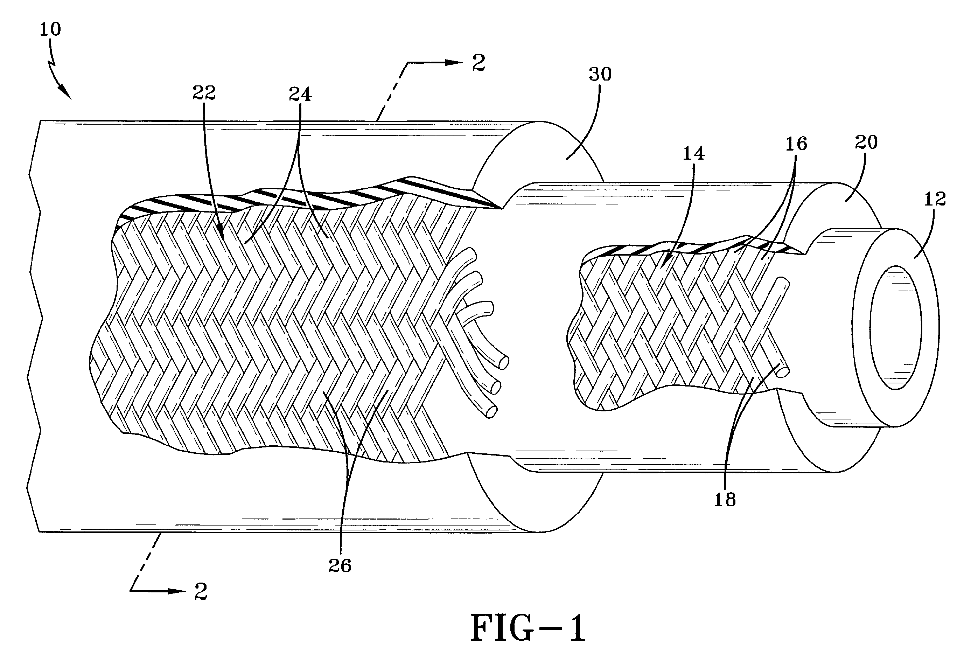

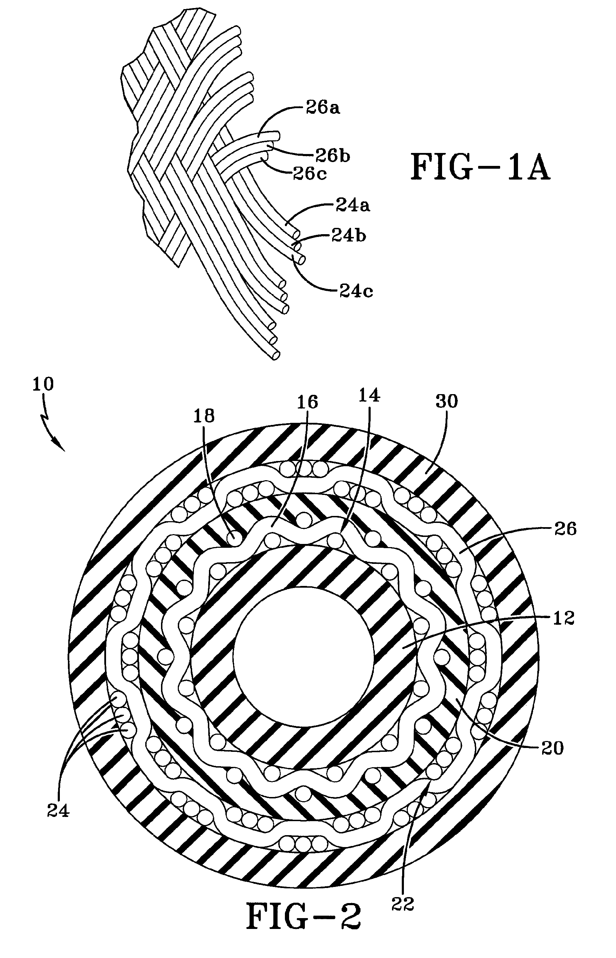

Referring to FIGS. 1 and 2, there is shown an exemplary hydraulic brake hose assembly 10 according to the present invention. The hose assembly 10 includes a core hose layer or tube 12 formed from polymeric material that is suitable for use in transporting a fluid material for which the hose is intended to be used. As examples, the polymeric material may comprise polychloroprene, chlorinated polyethylene acrylonitrile-budtadiene, styrene butadiene, polyisoprene, polybutadiene, ethylene-propylene-diene terpolymers, chlorinated polyethylene, or natural rubber polymers. Alternatively, the polymeric material may comprise thermoplastic elastomers such as propylene modified with ethylene-propylene rubber, such as Santoprene®, available from Monsanto Corporation; block polymers, such as the Kraton® line of polymers available from Shell Chemical Company; polyvinyl chloride, etc. These elastomers may be compounded with other filler, plasticizers, antioxidants, and cure systems to achieve particular properties desired for a given application, as known in the art.

A first reinforcing layer 14 is formed over the core hose layer and comprises a plurality of first and second reinforcing members 16, 18 wound in opposite directions around and along the length of the core hose layer 12 in a braided pattern by a rotary braiding machine, as known in the art. The reinforcing members 16, 18 may comprise strands of fiber material, such as cotton, rayon, polyester, polyvinyl alcohol, or other suitable fiber material. Alternatively, the reinforcing members 16, 18 may comprise strands of metallic material in the form of wire. In the embodiment shown in FIG. 1, the first and second reinforcing members 16, 18 of the first reinforcing layer 14 are braided in a pattern such that each first reinforcing member 16 crosses over an oppositely wound second reinforcing member 18, then passes under an adjacent, oppositely wound reinforcing member 18 in succession. This braid pattern is referred to herein as a 1-over, 1-under braid pattern.

The hose assembly 10, further includes an intermediate hose layer 20 formed over the first reinforcing layer 14, generally by extruding the intermediate hose layer 20 over the core hose layer 12 and first reinforcing layer 14. A second reinforcing layer 22 is then formed over the intermediate hose layer 20 and has first and second reinforcing members 24, 26 wound around and along the intermediate hose layer 20 in opposite directions, in the manner described above for the first reinforcing layer 14. In the embodiment shown in FIG. 1, the second reinforcing layer 22 is braided such that each first reinforcing member 24 passes successively over and under three of the oppositely wound second reinforcing members 26. This braid pattern is referred to herein as a 3-over, 3-under braid pattern.

The hose assembly 10 may further include an outer hose layer 30 formed over the second reinforcing layer 22, generally by extruding the outer layer 30 over the second reinforcing layer 22. The outer hose layer 30 protects the hose assembly 10 and is formed from a polymeric material suited for use in an application for which the hose assembly 10 will be used. As a non-limiting example, the outer hose layer may be formed from any of the various polymeric materials described above for the core hose layer 12.

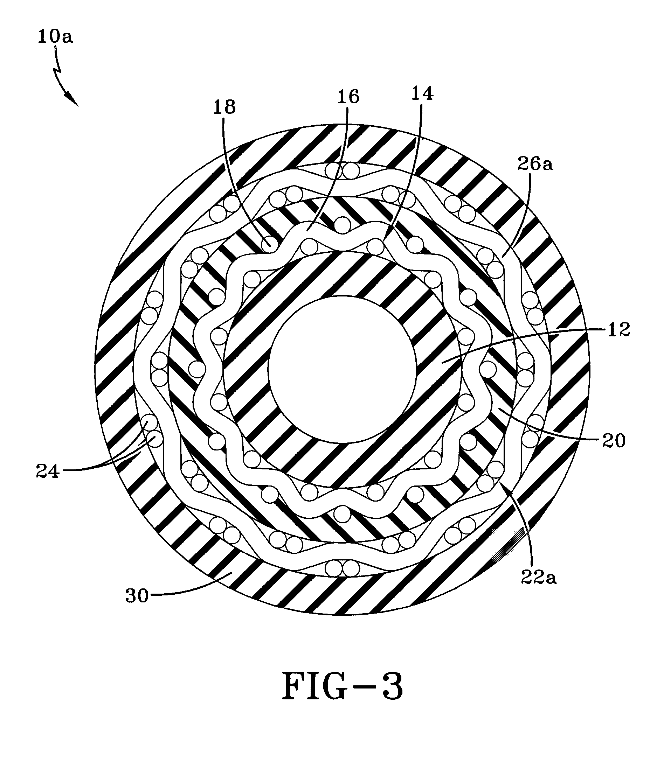

While the exemplary hose assembly 10 of FIGS. 1 and 2 has been shown and described herein as having a first reinforcing layer 14 with a 1-over, 1-under braid pattern, and a second reinforcing layer 22 with a 3-over, 3-under braid pattern, it will be recognized that either the first or second reinforcing layers 14, 22 may alternatively be formed with a conventional 2-over, 2-under braid pattern. For example, FIG. 3 depicts a cross-section of an alternative hose assembly 10a wherein the first reinforcing layer 14 has a 1-over, 1-under braid pattern and the second reinforcing layer 22a has a 2-over, 2-under pattern. In another embodiment, the first and second reinforcing layers 14, 22 can have braid patterns selected from one of a 1-over, 1-under pattern; a 2-over, 2-under pattern; or a 3-over, 3-under pattern. Accordingly, the braid patterns for the first and second reinforcing layers 14, 22 may be selected to have any of these braid patterns whereby various combinations of first and second reinforcing layer braid patterns may be produced.

FIGS. 1-3 depict hose assemblies wherein the reinforcing members 16, 18, 24, 26 of the first and second reinforcing layers 14, 22 comprise single strands of fiber or wire material. Alternatively, each reinforcing member 16, 18, 24, 26 may comprise a plurality of strands, as known in the art. For example, FIG. 1A is a detail view of a 3-over, 3-under braid pattern similar to the second reinforcing layer 22 of hose assembly 10 in FIG 1., but wherein each of the first and second reinforcing members 24, 26 comprise three strands of fiber or wire material 24a, 24b, 24c and 26a, 26b, 26c.

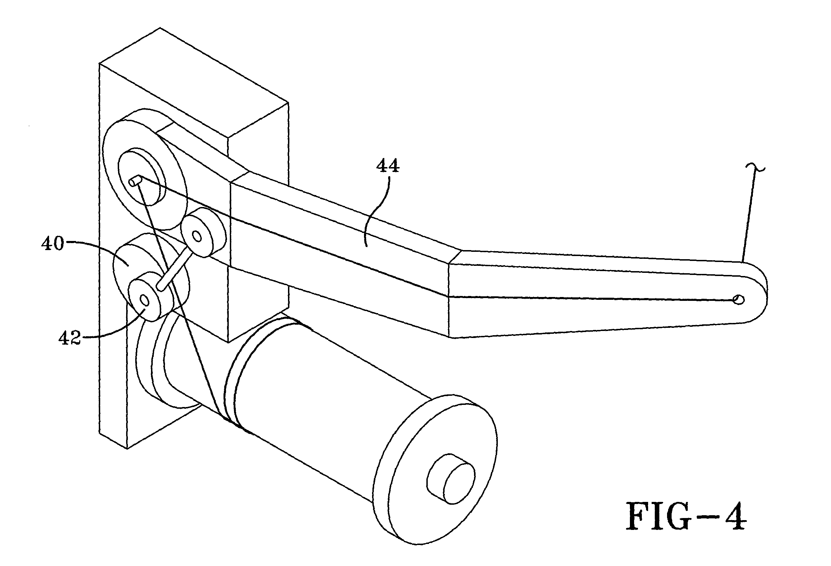

Advantageously, the particular braid pattern combination desired may be selected to optimize various properties of the hose assembly 10, such as burst strength, volumemetric expansion, dynamic life, or coupleability. The desired braid pattern may be selected by adjusting a cam on the rotary braiding machine used to form the reinforcing layers 14, 22. Referring to FIG. 4 for example, in the rotary braiding machine disclosed in U.S. Patent No. 5,099,744, a cam 40 and cam follower 42 control the motion of a pivotable arm 44 such that an end of the arm moves up and down to form the over-under patterns in the braid. To create the varied braid patterns, a small cam can be substituted for cam 40 when it is desired to form a 1-over, 1-under pattern. Similarly, a larger cam may be substituted when it is desired to form a 3-over, 3-under braid pattern. Accordingly, the cams are relatively easily changed to alter the braid pattern formed by the machine, whereby the same machine may be utilized to create various braid patterns as discussed above.

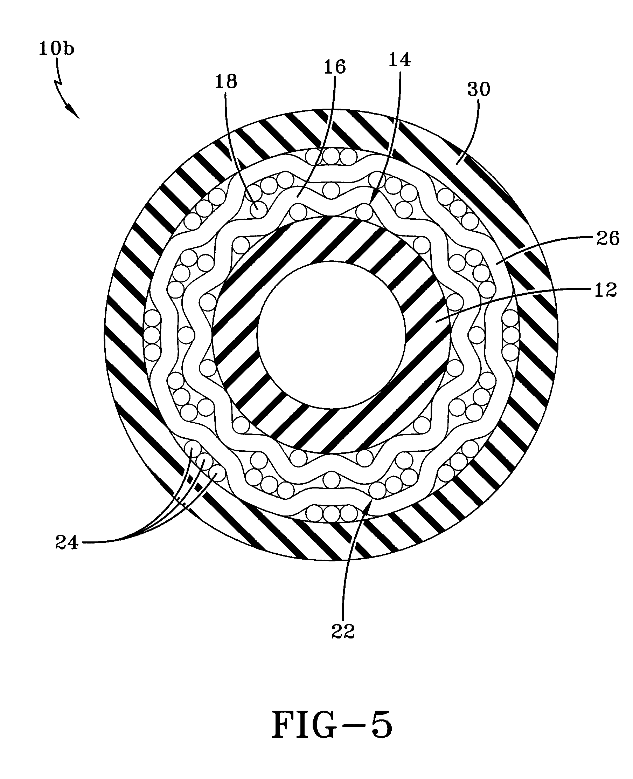

In another embodiment, depicted in FIG. 5, a hose assembly 10b may be formed as described above, except that an intermediate hose layer is not formed over the first reinforcing layer 14. Rather, the second reinforcing layer 22 is formed directly over the first reinforcing layer 14. Alternatively, an adhesive (not shown) may be applied over the first reinforcing layer 14 prior to forming the second reinforcing layer 22 over the first reinforcing layer 14.

According to another aspect of the invention, a method of making a hydraulic brake hose assembly 10 comprises forming a core hose layer 12, selectively braiding a first reinforcing layer 14 over the core hose layer 12 in one of a 1-over, 1-under pattern; a 2-over, 2-under pattern; or a 3-over, 3-under pattern. An intermediate hose layer 20 is formed over the first reinforcing layer 14, and a second reinforcing layer 22 is selectively braided over the intermediate hose layer 20 in one of a 1-over, 1-under pattern; a 2-over, 2-under pattern; and a 3-over, 3-under pattern. Finally, an outer hose layer 30 may be formed over the second reinforcing layer 22 to complete the hose assembly 10.

## Claims

1. A hydraulic brake hose assembly (10, 10a, 10b), comprising:
a core hose layer (12);
a first reinforcing layer (14) over said core hose layer;
a second reinforcing layer (22) over said first reinforcing layer; and
an outer hose layer (30) over said second reinforcing layer;
**characterized in that**
(A) one of said first and second reinforcing layers (14, 22) is formed in a 2-over, 2-under braid pattern, and the other of said first and second reinforcing layers (14, 22) is formed in one of a 1-over, 1-under braid pattern or a 3-over, 3-under braid pattern; or
(B) said first reinforcing layer (14) has a braid pattern formed in one of a 1-over, 1-under pattern or a 3-over, 3-under pattern; and said second reinforcing layer (22) has a braid pattern formed in one of a 1-over, 1-under pattern or a 3-over, 3-under pattern.

2. The hydraulic brake hose assembly of claim 1, further comprising an intermediate hose layer (20) over said first reinforcing layer (14) or formed between said first and second reinforcing layers (14, 22).

3. The hydraulic brake hose assembly of claim 1 or 2, wherein the first and second reinforcing layers (14, 22) are braided layers.

4. The hydraulic brake hose assembly of at least one of the previous claims, wherein at least one of said first and second reinforcing layers (14, 22) is formed from a fiber material or a metallic wire material.

5. The hydraulic brake hose assembly of at least one of the previous claims, wherein at least one of said first and second reinforcing layers (14, 22) comprises reinforcing members (16, 18, 24, 26) formed from a plurality of strands (26a, 26b, 26c, 24a, 24b, 24c) of reinforcing material.

6. The hydraulic brake hose assembly of at least one of the previous claims, further comprising an adhesive disposed between said first and second reinforcing layers (14, 22).

7. A method of making an hydraulic brake hose assembly, comprising:
forming a core hose layer (12);
selectively braiding a first reinforcing layer (14) over said core hose layer in one of a 1-over, 1-under pattern; a 2-over, 2-under pattern; or a 3-over, 3-under pattern;
selectively braiding a second reinforcing layer (22) over said first reinforcing layer in one of a 1-over, 1-under pattern; a 2-over, 2-under pattern; or a 3-over, 3-under pattern, and
forming an outer hose layer (30) over said second reinforcing layer (22).

8. The method of claim 7, comprising:
selectively braiding said first reinforcing layer (14) over said core hose layer (12) in one of a 1-over, 1-under pattern or a 3-over, 3-under pattern;
forming an intermediate hose layer (20) over said first reinforcing layer (14); and
selectively braiding said second reinforcing layer (22) over said intermediate hose layer (20) in one of a 1-over, 1-under pattern or a 3-over, 3-under pattern.

9. The method of claim 7 or 8, wherein the braid pattern of said second reinforcing layer (22) is different from the braid pattern of said first reinforcing layer (14).

10. The method of at least one of the claims 7 through 9, further comprising:
forming an intermediate hose layer (20) between said first and said second reinforcing layers (14, 22).
